# EUROPÄISCHE PATENTSCHRIFT

(11) **EP 3 353 441 B1**
(45) Veröffentlichungstag und Bekanntmachung des Hinweises auf die Patenterteilung: **17.07.2019**
(21) Anmeldenummer: 16797455.9
(22) Anmeldetag: 07.09.2016
(51) Int. Cl.: F16D 13/70

(54) **(DOPPEL-)KUPPLUNG MIT EINER DREHMOMENTÜBERTRAGUNGSPLATTE, SYSTEM UMFASSEND EINE KUPPLUNG UND EIN WERKZEUG UND VERFAHREN ZUM AUSWUCHTEN EINER KUPPLUNG**
(DUAL-)CLUTCH HAVING A TORQUE-TRANSFER PLATE, SYSTEM COMPRISING A CLUTCH AND A TOOL, AND METHOD FOR BALANCING A CLUTCH
(DOUBLE) EMBRAYAGE MUNI D'UNE PLAQUE DE TRANSMISSION DE COUPLE, SYSTÈME COMPRENANT UN EMBRAYAGE ET UN OUTIL ET PROCÉDÉ D'ÉQUILIBRAGE D'UN EMBRAYAGE

(30) Priorität: 25.09.2015 DE 102015218483
(43) Veröffentlichungstag der Anmeldung: 01.08.2018
(73) Patentinhaber: Schaeffler Technologies AG & Co. KG, 91074 Herzogenaurach (DE)
(72) Erfinder: PFEIFFER, Johannes, 79379 Müllheim (DE); KONSTANTINOV, Alexander, 77815 Bühl (DE); GÄRTNER, Mirco, 77731 Willstätt (DE)
(86) Internationale Anmeldenummer: PCT/DE2016/200422
(87) Internationale Veröffentlichungsnummer: WO 2017/050328

(56) Entgegenhaltungen:
- WO-A1-2014/082629
- DE-A1- 3 434 306
- DE-A1-102012 221 949
- FR-A1- 2 570 452
- US-A- 6 050 380

## Beschreibung

Die Erfindung betrifft eine (Doppel-)Kupplung mit zumindest einer Drehmomentübertragungsplatte, wie einer Anpressplatte, Druckplatte, Gegendruckplatte oder Zwischenplatte, wobei die Drehmomentübertragungsplatte Wuchtbereiche aufweist, die zum Massenverändern vorbereitet sind. Die Erfindung betrifft des Weiteren ein System, umfassend eine Kupplung und ein Werkzeug, sowie ein Verfahren zum Auswuchten einer solchen (Doppel-)Kupplung. Siehe als Stand der Technik DE3434306, DE102012221949, FR2570452, WO2014/082629 und US6050380.

Bei einer Montage von rotierenden Kupplungen, wie Reibkupplungen im Kfz-Bereich, sind gegebenenfalls vorliegende Unwuchten durch Auswuchten vollständig auszugleichen oder zumindest derart zu minimieren, dass nur noch eine zulässige Restunwucht vorliegt. Dazu werden der Betrag und der Winkel der Unwucht einer montierten Kupplung ermittelt. Anschließend wird die Kupplung ausgewuchtet, was in bekannter Weise durch Entfernen von Material, Verlagern von Material oder Anbringen von Material geschieht.

In einer Kupplung verwendete Reibbeläge sind in der Regel schmutzempfindlich. Aus diesem Grund ist bei einer vollständig montierten oder einer teilweise vormontierten Kupplung eine spanende Bearbeitung zur Entfernung von überschüssigem Material zum Wuchten nachteilig. Denn dabei anfallende Materialteilchen, wie Metallspäne, können zwischen Kupplungsscheiben oder Reibbeläge dringen und dort einen vorzeitigen Verschleiß oder sogar ein Versagen hervorrufen. In der Folge werden Kupplungen derzeit stattdessen durch Anbringen von zusätzlichem Material ausgewuchtet. Dies kann zum Beispiel durch Nieten oder Steckgewichte geschehen.

Aus dem Stand der Technik ist zum Auswuchten von Reibungskupplungen bekannt, an gewissen Kupplungsbauteilen ein als Wuchtgewicht dienendes Schraubenelement einzuschrauben. Dies ist beispielsweise in der DE 10 2009 007 829 A1 offenbart, wobei die Reibungskupplung ein Kupplungsgehäuse, eine mit diesem drehfest, jedoch begrenzt axial verlagerbar verbundene Anpressplatte sowie zwischen dem Kupplungsgehäuse und der Anpressplatte wirksame Bewegungsmittel zur axialen Kraftbeaufschlagung der Anpressplatte aufweist. Zum Auswuchten der Reibungskupplung weist wenigstens ein diese bildendes Bauteil Ausnehmungen aus, in welche Wuchtgewichte einschraubbar sind.

Bei anderen bekannten Kupplungen ist es üblich, Wuchtgewichte nach einem Ermitteln der Lage und der Größe einer Unwucht an zum Auswuchten geeigneten Stellen einzupressen. Dabei werden vorzugsweise Wuchtniete in eine Gegendruckplatte/Gegenplatte eingepresst. Dieser Auswuchtvorgang wird bisher erst nach dem vollständigen Zusammenbau der Reibungskupplung durchgeführt, so dass diese im Gesamten ausgewuchtet werden kann und alle Teile der Kupplung im Wuchtprozess berücksichtigt werden. Da sich die Wuchtgewichte/Wuchtniete im Betriebszustand unter keinen Bedingungen lösen dürfen, werden sie mit hohen Kräften mit einer Presspassung eingepresst. Infolge hoher Einpresskräfte kann es unter Umständen zu einem unzulässigen Verformen der zumeist aus einem Gussmaterial gefertigten Kupplungsbauteile kommen. Da der Bauraum im Bereich der Gegendruckplatte durch die benachbarte Anpressplatte und deren Blattfederanbindung zumeist begrenzt ist, ist es hierbei nicht möglich, einen entsprechenden Gegenhalter beim Einpressvorgang des Wuchtgewichtes anzubringen. Dadurch wird die Verformungsgefahr der Gegendruckplatte durch das Einpressen weiter erhöht.

Aus der bislang nicht veröffentlichten Patentanmeldung DE 10 2015 201 585 der Anmelderin ist ein Montageverfahren zum Zusammenbauen einer Kupplung für einen Antriebsstrang eines Kraftfahrzeuges bekannt, wobei die Kupplung mehrere Kupplungsbestandteile aufweist und das Verfahren zumindest folgende, zeitlich nacheinander ablaufende Schritte umfasst: a) Bereitstellen eines ersten zum Rotieren vorgesehenen Kupplungsbauteiles, b) Verbinden einer Vielzahl von Wuchtgewichten mit dem ersten Kupplungsbauteil, c) Verbinden der einzelnen Kupplungsbestandteile zum Ausbilden der Kupplung, wobei zumindest das erste Kupplungsbauteil drehfest mit einem zweiten Kupplungsbauteil verbunden wird, und d) Auswuchten der zusammengebauten Kupplung, indem zumindest eines der zuvor mit dem ersten Kupplungsbauteil verbundenen Wuchtgewichte in einem festgestellten Unwuchtbereich der Kupplung von dem ersten Kupplungsbauteil getrennt wird. Aus dieser Anmeldung ist des Weiteren bekannt eine Kupplung für einen Antriebsstrang eines Kraftfahrzeuges, mit einem zum Rotieren vorgesehenen, ersten Kupplungsbauteil und einem, drehfest mit dem ersten Kupplungsbauteil verbundenen, zweiten Kupplungsbauteil, wobei an zumindest dem ersten Kupplungsbauteil eine Vielzahl von Wuchtgewichten zum Ausgleich einer Unwucht angebracht ist, wobei die Wuchtgewichte derart ausgestaltet sind, dass sie zum Wiederentfernen von dem ersten Kupplungsbauteil geometrisch und/oder stofflich vorbereitet sind.

Es ist ein Nachteil bekannter Kupplungen, dass durch ein Setzen von Nieten oder Steckgewichten als Zusatzgewichte eine Zunahme des Gesamtgewichts der Kupplung bewirkt wird. Auch stellt ein Einpressen oder Anbringen von Zusatzgewichten unter Umständen eine nicht unproblematische Belastung der Kupplungsstruktur sowie aus fertigungstechnischer Sicht zusätzliche Arbeitsabläufe mit damit verbundenen zusätzlichen Kosten und Zeitaufwand dar. Ein weiterer Nachteil ist ein überproportionales Ansteigen der Rotationsträgheit der Kupplung mit dem Gewicht, da die Wuchtgewichte auf einem möglichst großen Durchmesser angebracht werden. Außerdem ist zum Ausbilden des Schließkopfes eines Nietes eine große beidseitige Zugänglichkeit für einen Gegenhalter erforderlich.

Ausgehend von dem vorgenannten Stand der Technik ist es die Aufgabe der vorliegenden Erfindung, ein Wuchtkonzept zu entwickeln, bei dem die Nachteile des Standes der Technik vermieden werden und insbesondere ein möglichst geringes Gesamtgewicht und eine geringe Rotationsträgheit der Kupplung erreicht werden. Des Weiteren soll ein Auswuchten der montierten oder zumindest teilweise montierten Kupplung einfach und schnell möglich sein. Es wäre zu begrüßen, wenn das Wuchtkonzept nicht zwingend eine beidseitige Zugänglichkeit der Kupplung erfordert. Schließlich sollen beim Auswuchten Belastungen, die die Kupplungsbauteile verformen können, sowie eine Verschmutzung oder Verunreinigung der montierten Kupplung vermieden werden.

Diese Aufgabe wird bei einer gattungsgemäßen Kupplung erfindungsgemäß dadurch gelöst, dass die zur Massenveränderung vorgesehenen Wuchtbereiche einstückig mit der Drehmomentübertragungsplatte ausgebildet sind und so ausgestaltet, bemessen und geometrisch beschaffen sind, dass eine spanlose Massenentnahme und insbesondere eine spanlose Entnahme einer Wuchtmasse durchführbar ist.

Die erfindungsgemäße Kupplung ist vorzugsweise eine Einfachkupplung oder eine Doppelkupplung, insbesondere eine Kraftfahrzeugkupplung, besonders bevorzugt eine Reibungskupplung oder Reibkupplung.

Verfahrensseitig wird die der Erfindung zugrundeliegende Aufgabe gelöst durch ein Verfahren zum Auswuchten einer Kupplung, vorzugsweise einer Kupplung nach der Erfindung, insbesondere gemäß der Beschreibung und/oder nach einem der angehängten Ansprüche, mit einer Drehmomentübertragungsplatte mit zum Massenverändern vorbereiteten Wuchtbereichen, wobei zum Ausgleichen der Unwucht zumindest ein Massenabschnitt oder eine Wuchtmasse spanlos entnommen wird. Bei der Drehmomentübertragungsplatte handelt es sich vorzugsweise um eine Drehmomentübertragungsplatte nach der Erfindung, insbesondere gemäß der Beschreibung und/oder nach einem der angehängten Ansprüche.

Im Gegensatz zu bekannten Wuchtkonzepten, insbesondere bei Wuchtkonzepten für Doppelkupplungen, die durch Anbringen von zusätzlichem Material und damit zusätzlicher Masse ausgewuchtet werden, erfolgt nach der Erfindung das Auswuchten der Kupplung spanlos durch Wegnahme, Abtrennung oder Entfernung von Material und damit Masse. Da das zum Auswuchten zu entfernende Material spanlos entfernt wird, können keine Späne zwischen die einzelnen Komponenten der Kupplung gelangen und dort vorzeitigen Verschleiß oder Schäden verursachen. Da Material entfernt wird, werden durch einen Auswuchtvorgang weder das Gewicht noch das Rotationsträgheitsmoment der Kupplung erhöht. Vielmehr wird es umso mehr reduziert, je mehr Material zum Herstellen eines unwuchtfreien Betriebs entfernt wird.

Bei der Drehmomentübertragungsplatte kann es sich im Rahmen der Erfindung um eine Gegenplatte und/oder eine Anpressplatte und/oder eine Kupplungsscheibe handeln. Anders ausgedrückt können die Wuchtbereiche an einer oder mehreren oder allen der genannten Kupplungselemente ausgebildet sein. Um ein besonders einfaches Auswuchten der Kupplung zu ermöglichen, weist die Drehmomentübertragungsplatte Wuchtbereiche, Wuchtabschnitte oder Wuchtsegmente auf. Diese sind zum Massenverändern vorbereitet, insbesondere zur gezielten Massenentnahme oder Massenentfernung, wodurch eine vorliegende Unwucht vermindert oder beseitigt wird. Es ist zu beachten, dass nach der Erfindung die Wuchtbereiche nicht nur an einer einzigen Drehmomentübertragungsplatte der Kupplung ausgebildet sein können. Vielmehr können mehrere oder auch alle Drehmomentübertragungsplatten einer Kupplung in der erfindungsgemäßen Weise Wuchtbereiche aufweisen.

Die Wuchtbereiche der Drehmomentübertragungsplatte sind nach der Erfindung einstückig oder einteilig mit der Drehmomentübertragungsplatte ausgebildet sind. Sie können daher insbesondere aus dem gleichen Material wie die Drehmomentübertragungsplatte bestehen und materialschlüssig sein. Hierdurch unterscheidet sich die Erfindung deutlich vom vorstehend beschriebenen Stand der Technik, bei dem zusätzliche, diskrete und nicht mit einer Drehmomentübertragungsplatte einteilige Wuchtelemente zum Beispiel in Form von Nieten oder Schrauben angebracht werden. Ein besonderer Vorteil ist, da die Wuchtbereiche einteilige Bestandteile der Drehmomentübertragungsplatte sind, dass die Drehmomentübertragungsplatte und die Kupplung keinen Montagekräften zum Anbringen, Befestigen oder Einpressen solch diskreter Wuchtgewichte ausgesetzt werden müssen.

Die "Wuchtbereiche" sind nach der Erfindung des Weiteren so ausgestaltet, bemessen und geometrisch beschaffen, dass dort eine spanlose Massenentnahme durchführbar ist. Mit der Bezeichnung "Wuchtbereich" ist vorliegend ein Teil / Abschnitt / Bereich der Drehmomentübertragungsplatte gemeint, der für eine Massenentnahme / Massenentfernung vorbereitet und bestimmt ist. Davon zu unterscheiden ist die beim Auswuchten tatsächlich entnommene / abgetrennte / entfernte "Wuchtmasse". Der Wuchtbereich kann beispielsweise teilweise zur Massenentnahme oder Massenreduzierung entfernt werden. In diesem Fall ist die Wuchtmasse ein Teil / Abschnitt / Bereich des Wuchtbereichs, also ein Wuchtbereichsabschnitt. Alternativ kann der Wuchtbereich vollständig oder zur Gänze zur Massenentnahme oder Massenreduzierung entfernt werden. In diesem Fall stellt der Wuchtbereich gleichzeitig die Wuchtmasse dar. Da die Massenentnahme in jedem Fall nach der Erfindung spanlos durchgeführt wird und die von der Drehmomentübertragungsplatte entfernte Wuchtmasse vorzugsweise als ein einziges Stück entfernt wird, erfolgt keine Verunreinigung der Drehmomentübertragungsplatte oder der Kupplung die entnommenes Material. Verschleiß sowie die Gefahr eines möglichen Versagens werden daher reduziert. Späne fallen nämlich nicht an.

Unter einer Kupplung im Sinne der Erfindung sind insbesondere Reibungs- / Reibkupplungen, beispielsweise in Form von Doppelkupplungen oder Einfachkupplungen, insbesondere Kfz-Kupplungen für einen Antriebsstrang eines Kraftfahrzeugs oder Motorstartkupplungen zu verstehen.

Vorteilhafte Ausführungsformen der Erfindung sind in den Unteransprüchen beansprucht und werden nachfolgend näher erläutert.

Eine Ausführungsform der Erfindung ist dadurch gekennzeichnet, dass die Wuchtbereiche als zum Entfernen vorkonfektionierte Massenabschnitte ausgebildet sind, zum Beispiel in Form von Laschen oder Nasen oder Stiften. Diese Massenabschnitte bilden Wuchtmassen aus, die beim Auswuchten der Kupplung in entsprechender Weise entfernt werden können. Alternativ kann zumindest ein Wuchtbereich einen oder mehrere vorkonfektionierte Massenabschnitte als Wuchtmassen aufweisen, die spanlos aus dem jeweiligen Wuchtbereich herauszulösen sind. Vorkonfektioniert in diesem Sinne kann insbesondere bedeuten, dass die Massenabschnitte vorbegrenzt oder vordefiniert sind, insbesondere eine vordefinierte Masse oder vordefinierte / begrenzte Abmessungen besitzen. Ein Wuchtbereich kann insbesondere eine oder mehrere Abschnitte oder Bereiche aufweisen, die für eine Entfernung einer vordefinierten Wuchtmasse oder mehrerer vordefinierter Wuchtmassen vorbereitet sind. Eine vordefinierte Wuchtmasse weist eine vordefinierte Masse auf, beispielweise eine Masse zwischen ca. 1g bis ca. 50g, bevorzugt zwischen ca. 5g und ca. 40g, bevorzugter zwischen ca. 10g und ca. 30g, bevorzugter zwischen ca. 15g und ca. 25g.

Alternativ können die Wuchtbereiche als begrenzungsfrei ausgestaltete Massenabschnitte ausgebildet sein oder derartige begrenzungsfreie Massenabschnitte aufweisen. Diese Massenabschnitte bilden die entsprechenden Wuchtmassen aus, die zum Auswuchten der Kupplung spanlos zu entfernen sind. Vorzugsweise erfolgt das unter Verwendung eines Lasers, mit dem variabel und genau auf die Größe und die Lage der jeweiligen Unwucht abgestimmte Wuchtmassen aus den Wuchtbereichen ausgeschnitten und spanlos entfernt werden können. Theoretisch könnten Markierungen vorgesehen sein.

Zum Beispiel kann zumindest ein Wuchtbereich bzw. die Wuchtmasse über eine Sollbruchstelle oder eine oder mehrere verdünnte oder eingeengte Materialbrücken mit der Drehmomentübertragungsplatte verbunden sein. Dabei kann die Sollbruchstelle insbesondere so geometrisch und/oder bezüglich ihrer Materialeigenschaften vorbereitet sein, dass sie bei Überschreiten einer Nennbelastung in definierter Weise zerbricht oder abtrennend versagt. Man kann auch sagen, dass mittels der Sollbruchstelle die Stelle festgelegt ist, an der die Wuchtmasse bzw. der Wuchtbereich bei einem Auswuchten von der Drehmomentübertragungsplatte gelöst und abgetrennt wird. Auf diese Weise kann mittels der Sollbruchstelle ein Materialabschnitt der Drehmomentübertragungsplatte von definierten Abmessungen und damit von definierter Masse bestimmt werden (also eine Wuchtmasse), der beim Auswuchten spanlos vorzugsweise als ein einziges Teil von der Drehmomentübertragungsplatte abgetrennt und entfernt wird.

Es ist besonders vorteilhaft, wenn zumindest ein Wuchtbereich / eine Wuchtmasse von der Drehmomentübertragungsplatte in radialer Richtung absteht. Alternativ oder zusätzlich kann zumindest ein Wuchtbereich / eine Wuchtmasse von der Drehmomentübertragungsplatte in axialer Richtung abstehen. Durch eine solche Ausbildung der Drehmomentübertragungsplatte kann erreicht werden, dass die Wuchtbereiche der Drehmomentübertragungsplatte zu einer Kupplungsplatte oder einer Kupplungsscheibe überstehen (insbesondere in axialer Richtung und/oder radialer Richtung). Folge einer solchen Ausgestaltung der Drehmomentübertragungsplatte ist eine gute Zugänglichkeit der Wuchtbereiche / Wuchtmassen bei fertig montierter bzw. teilmontierter Kupplung. Die jeweiligen Wuchtmassen sind so zum Abtrennen und Entfernen mit einem dafür bestimmten Werkzeug gut erreichbar. Dies ist insbesondere bei modernen trockenen Doppelkupplungen vorteilhaft, da dort aufgrund des begrenzten Bauraums in der Regel nicht einfach ausgewuchtet werden kann. Die Erfindung bietet in vorteilhafter Weise Ausführungsformen, die eine beidseitige axiale Zugänglichkeit ermöglichen oder bei einseitiger Zugänglichkeit keinen zusätzlichen radialen Bauraum benötigen.

Nach einer Form der Erfindung sind die Wuchtbereiche gleichmäßig über einen Umfang der Drehmomentübertragungsplatte verteilt ausgebildet. Insbesondere können die Wuchtbereiche gleichmäßig voneinander beabstandet sein. Hierdurch ist ein besonders genaues Auswuchten durch spanloses Entfernen vordefinierter Wuchtmassen möglich. Des Weiteren sieht eine Ausführungsform der Erfindung vor, dass die entsprechenden Wuchtmassen, insbesondere die Wuchtmassen eines Wuchtbereichs, zueinander gleichmäßig beabstandet sind.

Es ist besonders günstig, wenn die Drehmomentübertragungsplatte zusammen mit den Wuchtbereichen als Blechstanzteil, insbesondere als einteiliges Blechstanzteil, ausgebildet ist. Es kann sich zum Beispiel um ein Metallblechstanzteil, insbesondere um ein Stahlblechstanzteil handeln. Die Wuchtbereiche und ggf. vorliegende Wuchtmassen in Form von Laschen oder Nasen sind gleichzeitig beim Ausstanzen der Drehmomentübertragungsplatte ausgebildet. Auf diese Weise kann besonders einfach ein einstückiges / einteiliges, materialschlüssiges Bauelement als Drehmomentübertragungsplatte bereitgestellt werden, das sich gut für ein spanloses Auswuchten nach der Erfindung eignet.

Das spanlose Abtrennen und/oder Entfernen der zum Ausgleichen einer Unwucht zu entfernenden Wuchtbereiche, Wuchtmassen oder Wuchtbereichsabschnitte kann zum Beispiel durch Stanzen, Herausstanzen oder Abbrechen erfolgen. Dazu kann im Rahmen der Erfindung ein Stanzwerkzeug vorzugsweise mit einem Gegenhalter oder einer Matrize verwendet werden, um Verformungen oder starke Belastungen der Drehmomentübertragungsplatte vermeiden zu können. Mittels des Stanzwerkzeugs kann eine Wuchtmasse zum Beispiel über eine Sollbruchstelle in Form eines Verbindungssteges abgebrochen werden oder als diskreter Materialabschnitt aus einem Wuchtbereich ausgestanzt werden.

Alternativ oder zusätzlich kann das spanlose Abtrennen und/oder Entfernen der zum Ausgleichen einer Unwucht zu entfernenden Wuchtbereiche, Wuchtmassen oder Wuchtbereichsabschnitte mittels Heraustrennen durch einen Laser erfolgen. Dabei ist es von Vorteil, dass Wuchtmassen nahezu beliebiger Abmessung und Größe aus einem Wuchtbereich entfernt werden können, so dass ein hochgenaues Auswuchten möglich ist.

Die Erfindung betrifft auch ein System, umfassend ein Drehmomentübertragungsplattenwuchtwerkzeug und eine Kupplung, wobei das Werkzeug zur spanlosen Entnahme von Wuchtmassen von der Drehmomentübertragungsplatte vorbereitet ist, insbesondere auf einen Wuchtbereich und/oder eine Wuchtmasse von der Größe angepasst / ausgelegt ist.

Man kann auch sagen, dass mit der Erfindung vorgeschlagen wird, dass die Wuchtgewichte aus dem gleichen Material wie das Kupplungselement, insbesondere die Drehmomentübertragungsplatte, an dem sie angeordnet sind, einstückig mit diesem Element gebildet sind und/oder von dem Element hervorragend ausgebildet sind. Bei dem Herausragen kann es sich um radiales und/oder axiales Hervorragen handeln. Die Wuchtgewichte können dabei insbesondere radial nach außen geführt sein und dann weitere Elemente/Bereiche, insbesondere weitere Bereiche der entsprechenden Drehmomentübertragungsplatte und/oder anderer Elemente der Kupplung, überragen. Auf diese Weise kann eine einfache Zugänglichkeit erreicht werden. Besonders vorteilhaft ist nach der Erfindung die Drehmomentübertragungsplatte, insbesondere im Falle einer Kupplungsscheibe, aus Blech gestaltet. Auf diese Weise können die Wuchtgewichte besonderes einfach und effektiv beim Stanzen mit ausgebildet werden. Die hervorragenden Wuchtgewichte können Sollbruchstellen aufweisen. Die Erfindung betrifft auch ein Werkzeug, zum Beispiel in Form eines Stempels oder einer Zange, in Verbindung mit einer Kupplung, welches auf die Bruchstellen der Wuchtgewichte angepasst ist. Ebenso betrifft sie ein Wuchtverfahren mit spanlosem Ausbilden der Gewichte, Zusammenbau der Kupplung und anschließendem Entfernen der ausgebildeten Wuchtgewichte mittels insbesondere berührendem Verfahren (unter Verwendung von Zange/Stempel) oder berührungslosem Verfahren (beispielsweise unter Verwendung eines Lasers).

Die Erfindung wird nachfolgend mittels eines Ausführungsbeispiels anhand von Zeichnungen näher erläutert. Dabei zeigt:
- Fig. 1: in einer Aufsicht eine Kupplung nach dem Stand der Technik,
- Fig. 2: in einem Längsschnitt die Kupplung der Fig. 1,
- Fig. 3: in einer Aufsicht eine erste Ausführungsform einer Kupplung nach der Erfindung,
- Fig. 4: in einem Längsschnitt die Kupplung der Fig. 3,
- Fig. 5: in einer Aufsicht eine zweite Ausführungsform einer Kupplung nach der Erfindung,
- Fig. 6: in einem Längsschnitt die Kupplung der Fig. 5,
- Fig. 7: eine Detailansicht der Drehmomentübertragungsplatte der Kupplung der Figuren 5 und 6,
- Fig. 8: eine perspektivische Darstellung einer Abtrennung von Wuchtbereichen / Wuchtmassen der Kupplung der Figuren 5 bis 7 in einer ersten Ausführungsform des Verfahrens der Erfindung,
- Fig. 9: eine Darstellung des Vorgangs der Figur 8,
- Fig. 10: eine perspektivische Darstellung einer Abtrennung von Wuchtbereichen / Wuchtmassen der Kupplung der Figuren 5 bis 7 in einer zweiten Ausführungsform des Verfahrens der Erfindung,
- Fig. 11: eine Darstellung des Vorgangs der Figur 10,
- Fig. 12: in einer Aufsicht eine dritte Ausführungsform einer Kupplung nach der Erfindung,
- Fig. 13: in einem Längsschnitt die Kupplung der Fig. 12 und
- Fig. 14: eine Darstellung einer Abtrennung von Wuchtbereichen / Wuchtmassen der Kupplung der Figuren 12 und 13 in einer dritten Ausführungsform des Verfahrens der Erfindung.

Die Figuren sind teilweise lediglich schematischer Natur und dienen nur dem Verständnis der Erfindung. Die gleichen bzw. vergleichbaren Elemente sind mit denselben Bezugszeichen versehen.

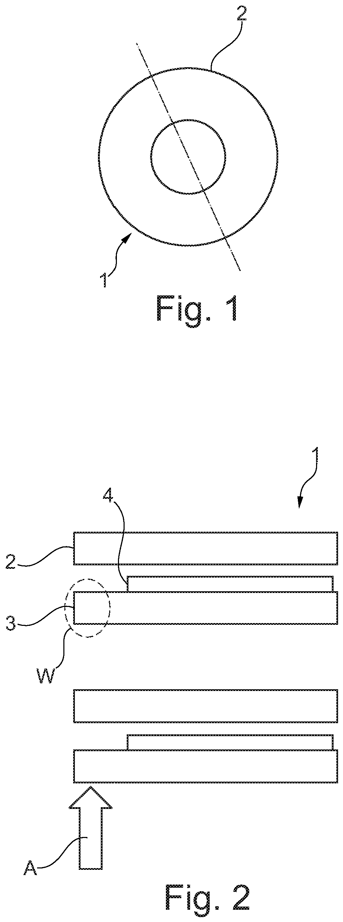

Die Figuren 1 und 2 zeigen eine Ausgangssituation nach dem Stand der Technik, also eine Kupplung 1 ohne Anpassung für eines der Wuchtkonzepte nach der Erfindung. Die Kupplung 1 weist eine Anpressplatte 2, eine Gegen(druck)platte 3 und eine zwischen diesen angeordnete Kupplungsscheibe 4 auf. In der Schnittdarstellung der Figur 2 ist eine Auswuchtposition W, an der eine Massenveränderung zum Ausgleichen einer bestehenden Unwucht durchzuführen ist, mittels eines gestrichelten Kreises angedeutet. Da die Anpressplatte 2 und die Gegenplatte 3 im Wesentlichen gleiche Abmessungen in radialer Richtung besitzen, besteht an der Gegenplatte 3, wie mittels eines Pfeils angedeutet, nur eine einseitige axiale Zugänglichkeit in Axialrichtung A.

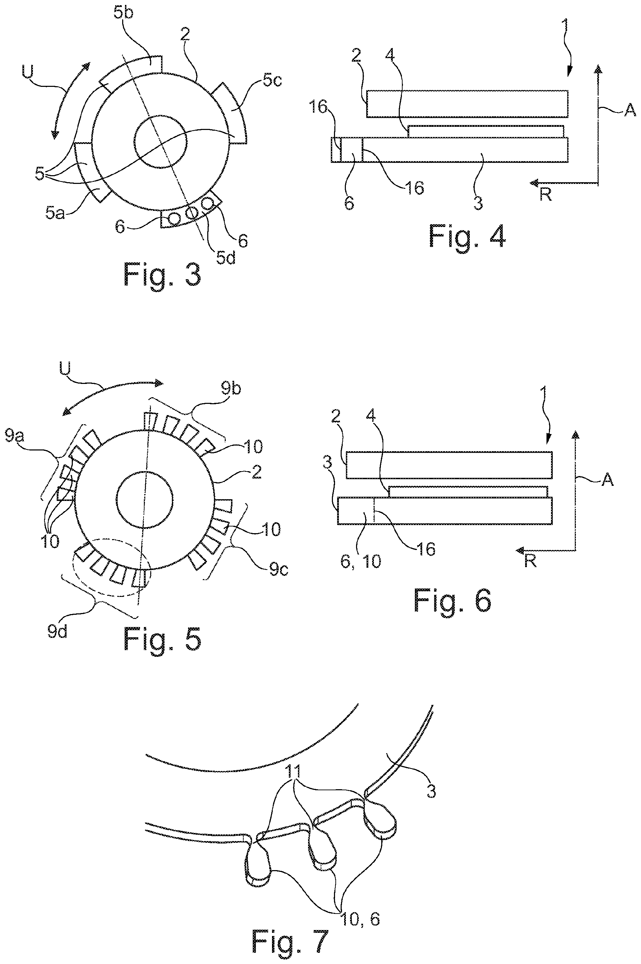

Die Figuren 3 und 4 zeigen eine erste Ausführungsform einer Kupplung 1 nach der Erfindung. Bei der Kupplung 1 kann es sich insbesondere um eine Doppelkupplung handeln.

Auch bei dieser Ausführungsform der Erfindung weist die Kupplung 1 eine Anpressplatte 2, eine Gegenplatte 3 und eine zwischen diesen angeordnete Kupplungsscheibe 4 auf. Bei dieser Ausführungsform bildet die Gegenplatte 3 die Drehmomentübertragungsplatte im Sinne der Erfindung aus. Es sei jedoch allgemein darauf hingewiesen, dass nach der Erfindung, also in allen Ausführungsformen, jede, einige oder alle von Gegendruckplatte 3, Anpressplatte 2 und Kupplungsscheibe 4 die Drehmomentübertragungsplatte bilden kann bzw. können.

An der Gegenplatte 3 sind Wuchtbereiche 5 ausgebildet. Diese Wuchtbereiche 5 ragen über den Außenrand der Gegenplatte 3 in radialer Richtung R hinaus und sind in umfänglicher Richtung segmentiert. Das bedeutet, dass die Gegenplatte 3 im dargestellten Ausführungsbeispiel vier segmentartige Wuchtbereiche 5 aufweist, einen ersten Wuchtbereich 5a, einen zweiten Wuchtbereich 5b, einen dritten Wuchtbereich 5c und einen vierten Wuchtbereich 5d. Die Wuchtbereiche 5a bis 5d sind in umfänglicher Richtung U gleich voneinander beabstandet. Wie in Figur 4 gut zu erkennen ist, ragen die Wuchtbereiche 5a bis 5d der Gegenplatte 3 in radialer Richtung außerdem über die Anpressplatte 2 und die Kupplungsscheibe 4 hinaus, so dass sie in Axialrichtung A von beiden Seiten gut zugänglich sind.

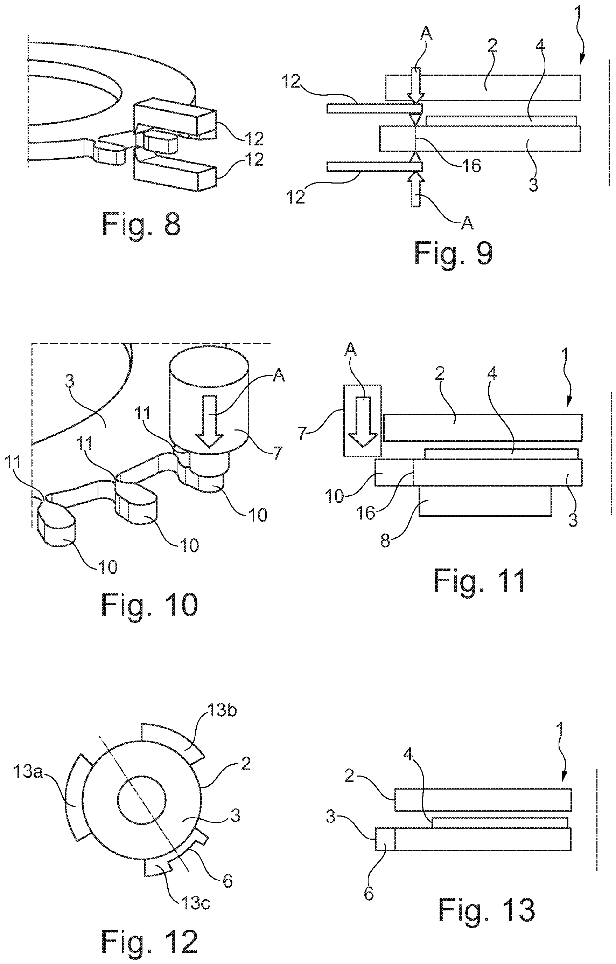

Zum Auswuchten der Kupplung 1 wird bzw. werden nach einem Feststellen der Lage und Größe der Unwucht aus einem oder mehreren der Wuchtbereiche 5a bis 5d Wuchtmassen 6 entfernt. Im Falle der Ausführungsform der Figuren 3 und 4 erfolgt dieses spanlose Entfernen mittels eines Stanzstempels 7 ähnlich dem der Figuren 10 und 11. Wie dort mit Bezug auf eine Ausführungsform der Kupplung gemäß den Figuren 5 bis 7 gezeigt, wirkt der Stanzstempel 7 mit einem Gegenhalter 8 oder einer Matrize 8 zusammen, der die Gegenplatte 3 stützt und deren Verformung beim Entfernen der Wuchtmassen 6 verhindert. Die auszustanzenden Wuchtmassen 6 können in den Wuchtbereichen 5a bis 5d von Sollbruchstellen 16 umgeben sein, die ein Herauslösen erleichtern.

Durch das radiale Herausstehen der Wuchtbereiche mit den daraus herauszutrennenden Wuchtmassen ist eine beidseitige axiale Zugänglichkeit gewährleistet. Bei der Gegendruckplatte 3 handelt es sich um ein Blechstanzteil. Bei dessen Ausstanzen aus nicht dargestelltem Blechmaterial, zum Beispiel Blechplatten, werden die Wuchtbereiche 5a bis 5d zusätzlich ausgespart. Nachdem Betrag und Winkel der Unwucht ermittelt sind, kann nachfolgend in den radial herausstehenden Wuchtsegmenten 5a bis 5d Material als Wuchtmasse in zuvor definierten Profilen ausgestanzt werden. Hierbei kann die Winkelposition des Wuchtloches, also die der Wuchtmasse 6, innerhalb eines Wuchtsegments 5a bis 5d frei gewählt werden. Somit erfolgt ein spanloses Auswuchten der komplett oder teilweise montierten Kupplung 1 durch Wegnehmen von Material.

Die Figuren 5 bis 7 zeigen eine zweite Ausführungsform einer Kupplung 1 nach der Erfindung. Zugehörig sind die Figuren 8 und 9, die ein erstes Verfahren zum Auswuchten der Kupplung 1 der Figuren 5 bis 7 zeigen. Außerdem zugehörig sind die Figuren 10 und 11, die ein zweites Verfahren zum Auswuchten der Kupplung 1 der Figuren 5 bis 7 zeigen.

Wie die Kupplung 1 der Figuren 3 und 4 weist auch die Kupplung 1 dieser zweiten Ausführungsform der Erfindung eine Anpressplatte 2, eine Gegenplatte 3 und eine zwischen diesen angeordnete Kupplungsscheibe 4 auf. Bei dieser Ausführungsform bildet die Gegenplatte 3 die Drehmomentübertragungsplatte im Sinne der Erfindung aus.

An der Gegenplatte 3 sind Wuchtbereiche 9a, 9b, 9c, 9d mit jeweils einer Mehrzahl von Laschen 10 oder Nasen als Wuchtmassen ausgebildet. Die Wuchtbereiche 9a bis 9d und damit auch die Laschen 10 ragen über den Außenrand der Gegenplatte 3 in radialer Richtung R hinaus und sind in umfänglicher Richtung segmentiert auf vier Abschnitte 9a, 9b, 9c und 9d aufgeteilt. Innerhalb der Abschnitte 9a bis 9d sind die Laschen 10 gleichmäßig voneinander beabstandet. Die vier segmentartigen Abschnitte 9a bis 9d sind voneinander ebenfalls gleich beabstandet. Bei einer nicht dargestellten Ausführungsform sind die Laschen 10 möglichst gleichmäßig über den Umfang verteilt.

Wie in Figur 6 zu erkennen ist, ragen die Laschen 10 in radialer Richtung außerdem über die Anpressplatte 2 und die Kupplungsscheibe 4 hinaus, so dass sie in Axialrichtung A von beiden Seiten gut zugänglich sind. Ein Vergleich der Figuren 4 und 6 verdeutlicht, dass der Überstand der Wuchtbereiche 5a bis 5d der ersten Ausführungsform größer ist, als der der Wuchtbereiche 9a bis 9d sowie der Laschen 10 der zweiten Ausführungsform. Die zweite Ausführungsform ist daher vorteilhaft bei engen Raumverhältnissen.

Der Grund, weshalb die zweite Ausführungsform mit weniger Überstand der Wuchtbereiche 9a bis 9d auskommt, ist deren laschenförmige oder nasenartige Ausgestaltung. Die Laschen 10 können insbesondere eine dünnere Materialdicke im Vergleich zu der Gegenplatte 3 und/oder eine geschwächte Anbindung an die Gegenplatte 3 mit Funktion einer Sollbruchstelle aufweisen. Das ergibt sich deutlich bei Betrachtung von Figur 7. Jede Lasche 10 ist über einen Steg 11 mit der Gegendruckplatte 3 verbunden. Anders ausgedrückt wird die mit dem Laschen 10 versehene Gegendruckplatte hergestellt, indem sie in einem Arbeitsgang / Stanzvorgang aus einem nicht dargestellten Blechmaterial ausgestanzt wird, wobei gleichzeitig die mit den Stegen 11 verbundenen Laschen 10 ausgebildet werden. Der Steg 11 weist einen gegenüber der jeweiligen Lasche 10 verringerten Querschnitt / Stärke / Breite / Dicke auf.

Durch das vorstehend beschriebene radiale Herausstehen der Wuchtbereiche 9a bis 9d und damit der Laschen 10 als die herauszutrennenden Wuchtmassen ist ein Auswuchten der Kupplung 1 auch bei nur einseitiger axialer Zugänglichkeit möglich. Bei der Gegendruckplatte 3 handelt es sich um ein Blechstanzteil. Bei dessen Ausstanzen aus nicht dargestelltem Blechmaterial, zum Beispiel Blechplatten, werden die Wuchtbereiche 9a bis 9d und die Laschen 10 zusätzlich ausgespart und direkt ausgebildet. Nachdem Betrag und Winkel der Unwucht ermittelt sind, kann nachfolgend entsprechend der ermittelten Unwucht eine oder mehrere der Laschen 10 als vordefinierte Wuchtmasse ausgestanzt werden. Somit erfolgt ein spanloses Auswuchten der komplett oder teilweise montierten Kupplung 1 durch spanloses Wegnehmen von Material in Form einzelner Laschen 10.

Nachdem Betrag und Winkel der Unwucht ermittelt worden sind, kann bzw. können nun zum Auswuchten der Kupplung 1 an den entsprechenden Stellen eine Lasche 10 oder mehrere Laschen 10 abgetrennt werden. Dies geschieht gemäß dem Verfahren der Figuren 8 und 9 durch eine Art Zange 12, die die Lasche 10 von beiden Seiten umgreift und an ihrer Schwächungsstelle oder Sollbruchstelle, hier in Form des Steges 11 von der Gegenplatte 3 zum Beispiel durch Scherkräfte abtrennt. Durch die Sollbruchstelle ist eine geringere Kraft zum Abtrennen der Lasche 10 erforderlich, wodurch die Zange 12 niedrig genug ausgeführt werden kann, um zwischen die Gegenplatte 3 und die Anpressplatte 2 zu passen. Dabei ergibt sich ein Bauraumvorteil, da die Lasche 10 auf einem kleineren Durchmesser als die Wuchtmassen 6 bei der ersten Ausführungsform abgetrennt wird und radial nicht viel über die Anpressplatte 2 herausstehen muss.

Wie in den Figuren 10 und 11 gezeigt ist, kann alternativ ein Stempel 7 axial verfahren und die Lasche 9 an ihrer Sollbruchstelle, hier in Form des Steges 9, die auf einem kleineren Durchmesser liegt als die Außenkontur der Anpressplatte 2, abbrechen. Auch hier ergibt sich ein Bauraumvorteil, da die Lasche 9 radial nicht viel über die Anpressplatte 2 herausstehen muss. Zusätzlich muss auf der gegenüberliegenden Seite auf einem Durchmesser, der kleiner ist als der der Sollbruchstelle, gegengehalten werden. Dazu wirkt der Stanzstempel 7 mit einem Gegenhalter 8 oder einer Matrize 8 zusammen, der die Gegenplatte 3 stützt und deren Verformung beim Entfernen der Wuchtmassen 6 verhindert. Somit erfolgt ein spanloses Auswuchten durch Wegnehmen von Material.

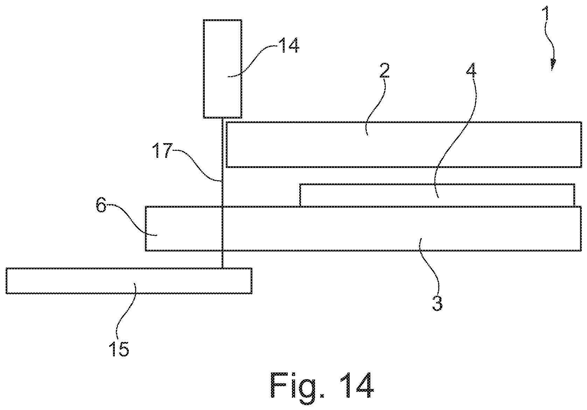

Die Figuren 12 bis 14 zeigen eine dritte Ausführungsform einer Kupplung 2 nach der Erfindung, wobei Figur 14 das Wuchtverfahren schematisch verdeutlicht. Wie die vorstehend beschriebenen Kupplungen 1 weist auch die Kupplung 1 dieser dritten Ausführungsform eine Anpressplatte 2, eine Gegenplatte 3 und eine zwischen diesen angeordnete Kupplungsscheibe 4 auf. Auch bei dieser Ausführungsform bildet die Gegenplatte 3 die Drehmomentübertragungsplatte im Sinne der Erfindung aus.

An der Gegenplatte 3 sind Wuchtbereiche 13a, 13b, 13c ausgebildet. Diese Wuchtbereiche 13a bis 13c ragen über den Außenrand der Gegenplatte 3 in radialer Richtung R hinaus und sind in umfänglicher Richtung segmentiert. Das bedeutet, dass die Gegenplatte 3 im dargestellten Ausführungsbeispiel drei segmentartige Wuchtbereiche 13a, 13b, 13c aufweist, einen ersten Wuchtbereich 13a, einen zweiten Wuchtbereich 13b und einen dritten Wuchtbereich 13c. Die Wuchtbereiche 13a bis 13c sind in umfänglicher Richtung U gleich voneinander beabstandet (siehe Figur 12). Wie in Figur 13 gut zu erkennen ist, ragen die Wuchtbereiche 13a bis 13c der Gegenplatte 3 in radialer Richtung R außerdem - ähnlich wie bei der vorstehend beschriebenen ersten Ausführungsform - über die Anpressplatte 2 und die Kupplungsscheibe 4 hinaus, so dass sie in Axialrichtung A von beiden Seiten gut zugänglich sind.

Bei der Gegendruckplatte 3 handelt es sich um ein Blechstanzteil. Bei dessen Ausstanzen aus nicht dargestelltem Blechmaterial, zum Beispiel Blechplatten, werden die Wuchtbereiche 13a bis 13c zusätzlich ausgespart und direkt ausgebildet. Nachdem Betrag und Winkel der Unwucht ermittelt sind, kann nachfolgend entsprechend der ermittelten Unwucht in den radial herausstehenden Segmenten Material in zuvor definierten oder variablen Profilen per Laser 14 und Laserstrahl 17 ausgeschnitten werden. Zum Schutz vor Streustrahlung oder durchtretender Strahlung ist eine Abschirmung 15 vorgesehen, die auf der dem Laser 14 gegenüberliegenden Seite der Kupplung 1 angeordnet ist. Somit erfolgt durch Abtrennen von Wuchtmasse mittels des Lasers 14 ein spanloses Auswuchten der komplett oder teilweise montierten Kupplung 1. Dabei ist besonders vorteilhaft, dass der Laser 14 infolge der geringen Strahlbreite des Laserstrahls 17 insbesondere bei schlechter Zugänglichkeit und beengten Raumverhältnissen eingesetzt werden kann. Ein weiterer Vorteil ist, dass mittels des Lasers 14 genau definierte und auf die Größe der Unwucht abgestimmte oder der Größe der Unwucht entsprechende Wuchtmassen aus den Wuchtbereichen 13a bis 13c herausgetrennt werden können, so dass besonders genau ausgewuchtet werden kann.

### Bezugszeichenliste

- 1: Kupplung
- 2: Anpressplatte, Drehmomentübertragungsplatte
- 3: Gegenplatte, Drehmomentübertragungsplatte
- 4: Kupplungsscheibe, Drehmomentübertragungsplatte
- 5: Wuchtbereich (5a, 5b, 5c, 5d)
- 6: Wuchtmasse
- 7: Stanzstempel
- 8: Gegenhalter, Matrize
- 9: Wuchtbereich (9a, 9b, 9c, 9d)
- 10: Lasche/ Nase
- 11: Steg
- 12: Zange
- 13: Wuchtbereich (13a, 13b, 13c)
- 14: Laser
- 15: Abschirmung
- 16: Sollbruchstelle
- 17: Laserstrahl
- W: Unwucht
- A: Axialrichtung
- R: Radialrichtung
- U: Umfangsrichtung

## Patentansprüche

1. Kupplung (1) mit zumindest einer Drehmomentübertragungsplatte (2, 3, 4), die Wuchtbereiche (5, 9, 13) aufweist, die zum Massenverändern vorbereitet sind, **dadurch gekennzeichnet, dass** die zur Massenveränderung vorgesehenen Wuchtbereiche (5, 9, 13) einstückig mit der Drehmomentübertragungsplatte (2, 3, 4) ausgebildet sind, so dass die Drehmomentübertragungsplatte (2,3,4) keinen Montagekräften ausgesetzt wird und so ausgestaltet, bemessen und geometrisch beschaffen sind, dass eine spanlose Entnahme zumindest einer Wuchtmasse (6, 10) durchführbar ist.

2. Kupplung (1) nach Anspruch 1, **dadurch gekennzeichnet, dass** die Wuchtbereiche (5, 9, 13) als zum Entfernen vorkonfektionierte Massenabschnitte ausgebildet sind oder zum Entfernen vorkonfektionierte Wuchtmassen (6, 10) aufweisen.

3. Kupplung (1) nach Anspruch 1 oder 2, **dadurch gekennzeichnet, dass** zumindest ein Wuchtbereich (5, 9, 13) oder eine Wuchtmasse (6, 10) über eine Sollbruchstelle mit der Drehmomentübertragungsplatte (2, 3, 4) verbunden ist.

4. Kupplung (1) nach einem der vorstehenden Ansprüche, **dadurch gekennzeichnet, dass** zumindest ein Wuchtbereich (5, 9, 13) oder eine Wuchtmasse (6, 10) von der Drehmomentübertragungsplatte (2, 3, 4) in radialer Richtung (R) absteht und/oder zumindest ein Wuchtbereich (5, 9, 13) oder eine Wuchtmasse (6, 10) von der Drehmomentübertragungsplatte (2, 3, 4) in axialer Richtung (A) absteht.

5. Kupplung (1) nach einem der vorstehenden Ansprüche, **dadurch gekennzeichnet, dass** die Wuchtbereiche (5, 9, 13) gleichmäßig über einen Umfang der Drehmomentübertragungsplatte (2, 3, 4) verteilt sind.

6. Kupplung (1) nach einem der vorstehenden Ansprüche, **dadurch gekennzeichnet, dass** die Wuchtbereiche (5, 9, 13) und/oder die Wuchtmassen (6, 10) in Umfangsrichtung (U) gleichmäßig voneinander beabstandet sind.

7. Kupplung (1) nach einem der vorstehenden Ansprüche, **dadurch gekennzeichnet, dass** die Wuchtbereiche (5, 9, 13) der Drehmomentübertragungsplatte (2, 3, 4) zu einer Kupplungsplatte (2, 3) oder einer Kupplungsscheibe (4) überstehen und/oder aus zumindest einer Axialrichtung (A) zugänglich sind.

8. System, aufweisend ein Drehmomentübertragungsplattenwuchtwerkzeug und eine Kupplung (1) nach einem der vorstehenden Ansprüche, **dadurch gekennzeichnet, dass** das Werkzeug zur spanlosen Entnahme von Wuchtmassen (6, 10) von der Drehmomentübertragungsplatte (2, 3, 4) vorbereitet ist.

9. Verfahren zum Auswuchten einer Kupplung (1) nach einem der Ansprüche 1 bis 8, mit einer Drehmomentübertragungsplatte (2, 3, 4) mit zum Massenverändern vorbereiteten Wuchtbereichen (5, 9, 13), **dadurch gekennzeichnet, dass** zum Ausgleichen einer Unwucht (W) zumindest ein Massenabschnitt oder eine Wuchtmasse (6, 10) spanlos entnommen wird und die Wuchtbereiche (5,9,13) montagekraftfrei, einstückig oder einteilig mit der Drehmomentübertragungsplatte ausgebildet sind.

## Claims

1. Clutch (1) having at least one torque transmission plate (2, 3, 4) which has balancing regions (5, 9, 13) which are provided for changing the mass, **characterized in that** the balancing regions (5, 9, 13) which are provided for changing the mass are configured in one piece with the torque transmission plate (2, 3, 4), with the result that the torque transmission plate (2, 3, 4) is not subjected to any assembly forces and is configured, dimensioned and provided geometrically in such a way that a non-cutting removal of at least one balancing mass (6, 10) can be carried out.

2. Clutch (1) according to Claim 1, **characterized in that** the balancing regions (5, 9, 13) are configured as mass sections which are prefabricated for removal, or have balancing masses (6, 10) which are prefabricated for removal.

3. Clutch (1) according to Claim 1 or 2, **characterized in that** at least one balancing region (5, 9, 13) or one balancing mass (6, 10) is connected via a predetermined break point to the torque transmission plate (2, 3, 4).

4. Clutch (1) according to one of the preceding claims, **characterized in that** at least one balancing region (5, 9, 13) or one balancing mass (6, 10) projects from the torque transmission plate (2, 3, 4) in the radial direction (R), and/or at least one balancing region (5, 9, 13) or one balancing mass (6, 10) projects from the torque transmission plate (2, 3, 4) in the axial direction (A).

5. Clutch (1) according to one of the preceding claims, **characterized in that** the balancing regions (5, 9, 13) are distributed uniformly over a circumference of the torque transmission plate (2, 3, 4).

6. Clutch (1) according to one of the preceding claims, **characterized in that** the balancing regions (5, 9, 13) and/or the balancing masses (6, 10) are spaced apart uniformly from one another in the circumferential direction (U).

7. Clutch (1) according to one of the preceding claims, **characterized in that** the balancing regions (5, 9, 13) of the torque transmission plate (2, 3, 4) project toward a clutch plate (2, 3) or a clutch disc (4), and/or are accessible from at least one axial direction (A).

8. System, having a torque transmission plate balancing tool and a clutch (1) according to one of the preceding claims, **characterized in that** the tool is provided for the non-cutting removal of balancing masses (6, 10) from the torque transmission plate (2, 3, 4).

9. Method for balancing a clutch (1) according to one of Claims 1 to 8, having a torque transmission plate (2, 3, 4) with balancing regions (5, 9, 13) which are provided for changing the mass, **characterized in that**, in order to compensate for an unbalance (W), at least one mass section or one balancing mass (6, 10) is removed in a non-cutting manner, and the balancing regions (5, 9, 13) are configured in one piece or in one part with the torque transmission plate in a manner which is free from assembly force.

## Revendications

1. Embrayage (1) comprenant au moins une plaque de transfert de couple (2, 3, 4) qui présente des régions d'équilibrage (5, 9, 13) qui sont adaptées pour une variation de masse, **caractérisé en ce que** les régions d'équilibrage (5, 9, 13) prévues pour une variation de masse sont réalisées d'une seule pièce avec la plaque de transfert de couple (2, 3, 4) de telle sorte que la plaque de transfert de couple (2, 3, 4) ne soit exposée à aucune force de montage, et sont configurées, dimensionnées et conçues géométriquement de telle sorte qu'un enlèvement sans enlèvement de copeaux d'au moins une masse d'équilibrage (6, 10) puisse être effectué.

2. Embrayage (1) selon la revendication 1, **caractérisé en ce que** les régions d'équilibrage (5, 9, 13) sont réalisées en tant que portions de masse préfabriquées pour leur enlèvement ou présentent des masses d'équilibrage (6, 10) préfabriquées en vue de leur enlèvement.

3. Embrayage (1) selon la revendication 1 ou 2, **caractérisé en ce qu'**au moins une région d'équilibrage (5, 9, 13) ou une masse d'équilibrage (6, 10) est raccordée à la plaque de transfert de couple (2, 3, 4) par le biais d'une zone destinée à la rupture.

4. Embrayage (1) selon l'une quelconque des revendications précédentes, **caractérisé en ce qu'**au moins une région d'équilibrage (5, 9, 13) ou une masse d'équilibrage (6, 10) fait saillie depuis la plaque de transfert de couple (2, 3, 4) dans la direction radiale (R) et/ou au moins une région d'équilibrage (5, 9, 13) ou une masse d'équilibrage (6, 10) fait saillie depuis la plaque de transfert de couple (2, 3, 4) dans la direction axiale (A).

5. Embrayage (1) selon l'une quelconque des revendications précédentes, **caractérisé en ce que** les régions d'équilibrage (5, 9, 13) sont réparties uniformément sur une périphérie de la plaque de transfert de couple (2, 3, 4).

6. Embrayage (1) selon l'une quelconque des revendications précédentes, **caractérisé en ce que** les régions d'équilibrage (5, 9, 13) et/ou les masses d'équilibrage (6, 10) sont espacées uniformément les unes des autres dans la direction périphérique (U).

7. Embrayage (1) selon l'une quelconque des revendications précédentes, **caractérisé en ce que** les régions d'équilibrage (5, 9, 13) de la plaque de transfert de couple (2, 3, 4) dépassent par rapport à une plaque d'embrayage (2, 3) ou un disque d'embrayage (4) et/ou sont accessibles à partir d'au moins une direction axiale (A).

8. Système présentant un outil d'équilibrage des plaques de transfert de couple et un embrayage (1) selon l'une quelconque des revendications précédentes, **caractérisé en ce que** l'outil est adapté pour l'enlèvement sans enlèvement de copeaux de masses d'équilibrage (6, 10) de la plaque de transfert de couple (2, 3, 4).

9. Procédé d'équilibrage d'un embrayage (1) selon l'une quelconque des revendications 1 à 8, comprenant une plaque de transfert de couple (2, 3, 4) avec des régions d'équilibrage (5, 9, 13) adaptées pour une variation de masse, **caractérisé en ce que** pour compenser un déséquilibre (W), au moins une portion de masse ou une masse d'équilibrage (6, 10) est enlevée sans enlèvement de copeaux et les régions d'équilibrage (5, 9, 13) sont réalisées sans force de montage, d'une seule pièce ou monobloc avec la plaque de transfert de couple.
